# EUROPÄISCHE PATENTSCHRIFT

(11) **EP 0 500 746 B1**
(45) Veröffentlichungstag und Bekanntmachung des Hinweises auf die Patenterteilung: **25.08.1993**
(21) Anmeldenummer: 90917596.0
(22) Anmeldetag: 15.11.1990
(51) Int. Cl.: F16D 1/09, F16B 3/06

(54) **KONUSSPANNSATZ**
TAPER-TYPE TIGHTENER UNIT
SYSTEME DE SERRAGE CONIQUE

(30) Priorität: 18.11.1989 DE 3938445; 08.03.1990 DE 4007332
(43) Veröffentlichungstag der Anmeldung: 02.09.1992
(73) Patentinhaber: Müllenberg, Ralph, D-41516 Grevenbroich (DE)
(72) Erfinder: Müllenberg, Ralph, D-41516 Grevenbroich (DE)
(74) Vertreter: Palgen, Peter, Dr. Dipl.-Phys.
(86) Internationale Anmeldenummer: DE9000878
(87) Internationale Veröffentlichungsnummer: WO9107600

(56) Entgegenhaltungen:
- DE-B- 2 419 933
- DE-B- 2 444 104
- GB-A- 1 417 107
- NO-B- 109 223
- US-A- 3 958 888
- US-A- 4 053 244

## Beschreibung

Aus der GB-PS 14 17 107 ist ein Konusspannsatz mit zwei zusammenwirkenden Konusringen bekannt, von denen der eine einen radialen Flansch aufweist, in dem axiale Spannschrauben angeordnet sind, die mit ihren Kopfenden den anderen Konusring teilweise übergreifen und mit dem Rand des Kopfes einseitig in eine äußere Umfangsnut des anderen Konusrings eingreifen. Beim Anziehen oder Lösen der Spannschrauben legen sich die Köpfe gegen die eine oder andere Flanke der Umfangsnut.

Dieser Konusspannsatz ist zur Ausübung größerer Kräfte ungeeignet, weil die Schrauben nur einseitig mit dem Rand ihrer Köpfe abgestützt sind und sich hohe Flächenpressungen an der Anlagestelle sowie Biegemomente ergeben.

Konusspannanordnungen, die keine in sich geschlossenen Konusspannsätze darstellen, jedoch ähnliche Merkmale aufweisen, gehen aus der DE-PS 924 407 bzw. der US-PS 25 70 604 hervor.

Ein Spannsatz mit den dem Oberbegriff des Anspruchs 1 entsprechenden Merkmalen geht aus der DE-A 24 44 104 hervor.

Der Erfindung liegt die Aufgabe zugrunde, einen gattungsgemäßen Konusspannsatz so auszugestalten, daß er einfach, variabel und zur rein kraftschlüssigen Übertragung größerer Kräfte in der Lage ist.

Diese Aufgabe wird durch die in Anspruch 1 wiedergegebene Erfindung gelöst.

Dadurch, daß sich die Flanken des einen Konusrings bzw. der zylindrischen Büchse jeweils vor großen Teilen der Anlagefläche des betreffenden Umfangsvorsprungs erstrecken, hat der Umfangsvorsprung bei beiden Drehrichtungen an beiden Anlageflächen ein fast vollflächiges Widerlager, wodurch sich einerseits die Flächenpressungen an den Anlageflächen verringern und andererseits der Umfangsvorsprung symmetrisch beansprucht wird, so daß keine Biegekräfte auf die Schrauben ausgeübt werden. Die Flanken der Ausnehmung sollen sich "gegen Axialkräfte abstützend" über die Anlageflächen erstrecken, d.h. sie sollen durch entsprechende Bemessung der Materialmengen stabil hinterlagert sein, damit sie auch Kräfte aufnehmen können. An blechdünnen Seitenteilen ausgebildete Flanken erfüllen den Zweck der Erfindung nicht.

Durch die Erfindung erhält die Schraube bei beiden Drehrichtungen axiale Widerlager, die Kräfte vergleichbarer Größe zu übertragen in der Lage sind. Die Schrauben dienen sowohl als Spannschrauben als auch als Löseschrauben. Es muß also nicht mehr Platz für eigene Löseschrauben belassen werden, wie es bei den bisherigen Konusspannverbindungen meist der Fall war. Der gewonnene Raum kann für weitere Schrauben und damit zur Erhöhung der insgesamt aufbringbaren Axialkraft genutzt werden. Das Lösen des Spannsatzes erfolgt nicht, wie meist bei den bekannten Konstruktionen, indem die Löseschrauben mit ihrem Ende gegen eine Anlagefläche wirken. Dabei sind die übertragbaren Kräfte gering und besteht eine Gefahr der Beschädigung der Löseschrauben. Bei der Erfindung erfolgt das Lösen vielmehr unter Übertragung der Kräfte-an der Anlagefläche des Umfangsvorsprungs, d.h. auf einer viel größeren Fläche mit entsprechend erniedrigter Flächenpressung. Außerdem stehen sämtliche vorhandenen Schrauben zur Aufbringung der Lösekraft zur Verfügung. Die erhöhten und mit den Spannkräften durchaus vergleichbaren Lösekräfte ermöglichen es, besonders flache Konuswinkel bis herab zu 2° einzusetzen. Bei flachen Konuswinkeln ist der Wirkungsgrad der Umsetzung der axialen Spannkräfte in radiale Klemmkräfte besonders hoch, d.h. es können mit gleichen axialen Spannkräften durch reinen Reibungsschluß besonders hohe Drehmomente übertragen werden.

Die zur Aufnahme des Umfangsvorsprungs, also z.B. des Kopfes, der Schraube dienende Ausnehmung ist durch zwei voneinander getrennte Teile gebildet. Die eine flanke der Ausnehmung wird durch die Stirnseite eines Konusrings, die andere Flanke der Ausnehmung durch die eine Seite des Endflansches der Innen- bzw. Außenbüchse gebildet. Dies hat einerseits den Vorteil, daß durch unterschiedlich bemessene Innen- oder Außenbüchsen eine Durchmesseranpassung ohne Änderung der Konusbauteile erfolgen kann und daß andererseits standardmäßige, bereits jetzt im Handel oder im Einsatz befindliche Konusspannsätze durch die Hinzufügung der Innen- bzw. Außenbüchse in der erfindungsgemäßen Weise betrieben werden können.

Insgesamt ergibt die Erfindung einen Konusspannsatz besonders hocher Lei tungsfähigkeit, die leicht wieder gelöst werden kann. Das übertragbare Drehmoment pro Gewichtseinheit ist wesentlich höher als bei bekannten Ausführungsformen.

Die Ringscheiben nach Anspruch 2 empfehlen sich, um die Reibungsverluste an den Anlageflächen des Umfangsvorsprungs der Schrauben geringzuhalten. Es kann sich beispielsweise um Scheiben aus gehärtetem Stahl handeln, die mit einem Festschmierstoff behandelt sind.

Gemäß Anspruch 3 sollte die Ausnehmung den Umfangsvorsprung in Achsrichtung mit nur geringem Spiel aufnehmen.

Dies bietet insbesondere eine Sicherung beim Anziehen der Konusspannanordnung. Bei den herkömmlichen Konusspannanordnungen mußte bei der Vielzahl der über den Umfang verteilten Schrauben ein bestimmtes Anzugssystem sorgfältig eingehalten werden um zu verhindern, daß durch zu starkes einseitiges Anziehen ein Schiefziehen der Konusspannanordnung eintrat. Wenn bei der erfindungsgemäßen Enge der Ausnehmung eine Schraube angezogen wird und eine bestimmte axiale Verlagerung der Konusbauteile gegeneinander herbeigeführt hat, stoßen die benachbarten Schrauben nach einer geringen Strecke im Bereich von 0,3 bis 2,0 mm mit der anderen Seite ihres Umfangsvorsprungs an die andere Flanke der Ausnehmung an und blockieren dadurch das weitere bzw. zu weite Anziehen der erstgenannten Schraube. Es ergibt sich von selbst eine zwangszweise Vergleichmäßigung des Schraubenanzugs.

Bei einer wichtigen Ausführungsform der Erfindung ist der Umfangsvorsprung der Kopf einer Zylinderkopfschraube (Anspruch 4).

Die Alternative ist eine Art Sonderschraube nach Anspruch 5, bei der der Schaft von dem Umfangsvorsprung nach beiden Seiten weitergeht.

Ob der Ausschnitt für den Schraubenschaft gemäß Anspruch 6 auf einer Seite oder beiden Seiten dEr Ausnehmung vorzusehen ist, hängt davon ab, ob es sich um eine Kopfschraube oder eine "beidseitige" Schraube handelt.

Die Sacklochungen nach Anspruch 7 bedeuten, daß der Endflansch der Innen- oder Außenbüchse wesentlich dicker gemacht werden kann, so daß einer Verformung durch die axialen Lösekräfte entgegengewirkt wird.

Die Weiterbildung nach Anspruch 8 ergibt eine Art Einkapselung der Umfangsvorsprünge bzw. Schraubenköpfe, die einer Verschmutzung und Korrosion vorbeugt.

In den Ansprüchen 9 bis 12 sind besondere Ausführungsformen von Spannanordnungen mit zusätzlichen zylindrischen Büchsen wiedergegeben, deren gemeinsamer Vorteil darin besteht, daß beim Anziehen des Spannsatzes keine Verlagerung des äußeren Bauteils gegenüber dem inneren Bauteil in axialer Richtung stattfindet und die Spannsätze stets positiv lösbar sind.

In der Zeichnung sind Ausführungsbeispiele der Erfindung dargestellt.
Fig. 1 zeigt einen durch die Achse gehenden Teilschnitt durch eine erste Ausführungsform eines Spannsatzes;
Fig. 2 und 3 zeigen Fig. 1 entsprechende Darstellungen weiterer Ausführungsformen;
Fig. 4 zeigt eine Teilansicht gemäß Fig. 3 mit einer Detailänderung;
Fig. 5 bis 7 zeigen durch die Achse gehende Schnitte von weiteren als Spannsätze ausgebildeten Ausführungsformen, wobei das innere und das äußere Bauteil weggelassen sind.

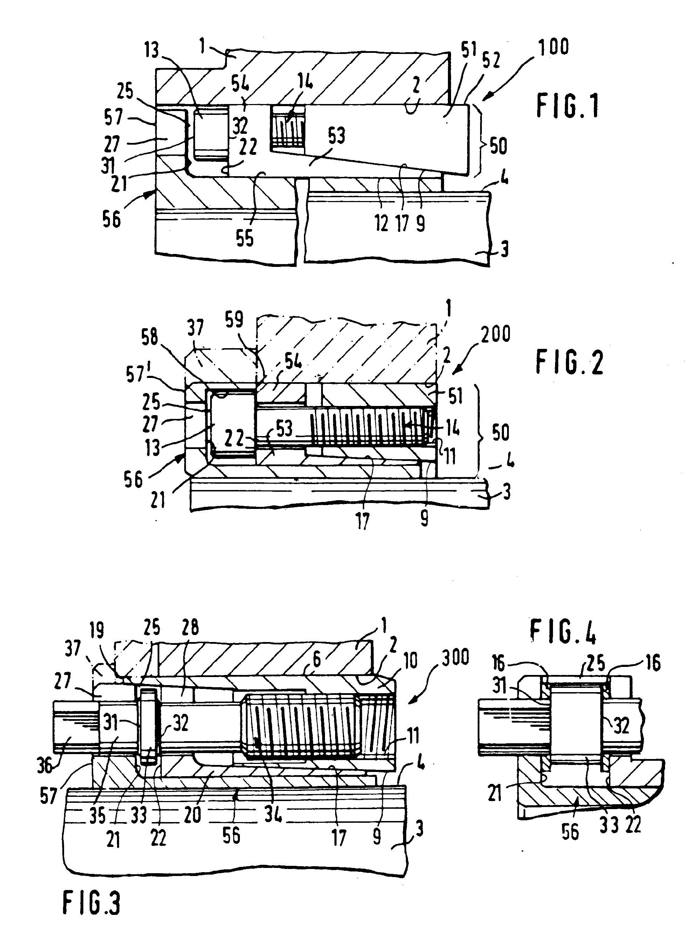

Der Spannsatz 100 der Fig. 1 dient zum kraftschlüssigen Festsetzen eines äußeren Bauteils 1 mit einer zylindrischen Ausnehmung 2 auf einem inneren Bauteil, zum Beispiel einer Welle 3, mit einem zylindrischen Außenumfang 4. Die Ausnehmung 2 und der Außenumfang 4 sind konzentrisch zueinander angeordnet und belassen zwischen sich einen zylindrischen Zwischenraum.

In diesem Zwischenraum ist der Spannsatz 100 angeordnet.

Der Spannsatz 100 in Fig. 1 umfaßt einen dickwandigen Konusring 51, der mit seiner zylindrischen Außenumfangsfläche 52 in der Ausnehmung 2 des äußeren Bauteils 1 anliegt, eine konische Innenumfangsfläche 9 aufweist und axiale Gewindebohrungen enthält, in die die Schrauben 14 eingeschraubt sind. Der innere Konusring 53 ist demgegenüber dünnwandiger ausgebildet und besitzt eine konische Außenumfangsfläche 17, die den gleichen im Selbsthemmungsbereich liegenden Konuswinkel wie die Konusfläche 9 aufweist und an dieser anliegt. Ferner ist an seinem dickwandigen Ende ein sich von der am dünnwandigen Ende des Konusrings 51 gelegenen Stirnseite desselben erstreckender Flansch 54 vorgesehen, durch den die Schrauben 14 hindurchgreifen und gegen dessen äußere Flanke 22 die Köpfe 13 der Schrauben 14 von außen anliegen.

Die Konusringe 51,53 bilden zusammen einen herkömmlichen Spannsatz 50. Der zylindrische Innenumfang 12 des Konusrings 53 sitzt jedoch nicht, wie üblich, auf dem Außenumfang 4 der Welle 3, sondern auf dem Außenumfang 55 einer zylindrischen Büchse 56, die axial außerhalb der Schraubenköpfe 13 einen radialen Flansch 57 aufweist, der auf der Seite der Schraubenköpfe 13 eine zur Achse senkrechte Flanke 21 besitzt und sich radial bis zum äußeren Rand der Schraubenköpfe 13 erstreckt sowie Ausschnitte 27 zum HIndurchführen eines Drehwerkzeugs zum Angriff an den Schraubenköpfen 13 enthält. Die Ausschnitte 27 sind gerade so breit, daß von außen ein Drehwerkzeug in die Sechskantausnehmung des Schraubenkopfes 13 eingesteckt und dieser auf diese Weise gedreht werden kann (Fig. 1 und 2) bzw. daß der Schraubenschaft 35 gerade hindurchpaßt (Fig. 3). Zwischen den Flanken 21 und 22 der Flansche 57 und 54 ist eine Ausnehmung 25 zur Aufnahme der Schraubenköpfe 13 gebildet.

Jeder Schraubenkopf 13 bildet einen Umfangsvorsprung, der in der Ausnehmung 25 in beiden Achsrichtungen abgestützt ist. Die Oberseite des Schraubenkopfes bildet dabei eine Anlagefläche 31, die mit der Flanke 21 der Ausnehmung 25 zusammenwirken kann, die Unterseite des Schraubenkopfes 13 eine Anlagefläche 32 für die Flanke 22.

Wird die Schraube 14 angezogen, so werden die Konusringe 51,53 aufeinanderzu bewegt und gleiten die Konusflächerpaare 9,17 aufeinander ab. Die Konuswinkel liegen in dem Ausführungsbeispiel bei etwa 3°. Durch das Hinaufgleiten über die Konusflächen weitet sich der Spannsatz radial aus und klemmt dadurch das äußere BAuteil 1 auf der Welle 3 fest.

Wenn die Spannschrauben 14 nach erfolgter Verspannung wieder gelöst werden, bleibt der Spannsatz 100 verspannt, weil die Konuswinkel selbsthemmend sind. Es ist also erforderlich, zum Lösen des Spannsatzes 100 eine eigene axiale Lösekraft aufzubringen. Dies geschieht, indem die Schrauben 14 weiter herausgedreht werden, bis sie mit der durch die Außenseite des Schraubenkopfes 13 gebildeten Anlagefläche 31 an der Flanke 21 der Ausnehmung 25 anliegen. Beim Weiterdrehen wird dadurch der Konusring 51 von dem Konusring 53 abgeschoben und der Spannsatz 100 gelöst. Die Schrauben 14 dienen also sowohl zum Spannen als auch zum Lösen des Spannsatzes 100. Sie können über den Umfang des Flansches 18 dicht bei dicht angeordnet werden, so daß der gesamte zur Verfügung stehende Raum für die Aufbringung axialer Kräfte genutzt werden kann.

Die Breite der Ausnehmung 25 zwischen den Flanken 21 und 22 ist in dem Ausführungsbeispiel nur etwa 1 mm größer als die axiale Erstreckung des Schraubenkopfes 13 und der Ringscheibe 16. Wenn dadurch eine bestimmte Schraube 14 angezogen wird und den Konusring 2o um diesen einen Millimeter mitgenommen hat, stoßen die benachbarten Schrauben mit den äußeren Anlageflächen 31 an den Flanken 21 der dortigen Ausnehmungen 25 an und begrenzen auf diese Weise das weitere Anziehen der ersten Schraube 14. Auf diese Weise wird das Schiefziehen des Spannsatzes 100 beim Verspannen unterbunden.

Der gezeigte Spannsatz hat ein besonders geringes Leistungsgewicht, d.h. das Spannsatzgewicht, welches für die Übertragung eines bestimmten Drehmoments benötigt wird, ist besonders gering. Dies kommt dadurch zustande, daß besonders viele Schrauben verwendet werden können, weil kein Platz für eigene Löseschrauben verlorengeht, und daß das Arbeiten mit besonders geringen Konuswinkeln möglich ist, weil die dann erforderlichen Abdrückkräfte, die ja nunmehr durch die gleichen Schrauben aufgebracht werden, ohne weiteres erreichbar sind.

Die Büchse 56 kann verschiedene Innendurchmesser aufweisen, um eine Anpassung an verschiedene Wellendurchmesser zu ermöglichen, wie es in der linken und rechten Hälfte der Fig. 1 angedeutet ist. Der Vorteil dieser Ausführungsform besteht darin, daß für den Spannsatz 51,53 standardmäßig vorhandene Bauteile eingesetzt werden können.

Soweit Querschnittsflächen nicht schraffiert sind, bedeutet dies, daß der betreffende Konusring an einer Stelle geschlitzt sein soll, um ihn nachgiebig zu machen und Spannkraftverluste der Schrauben 14 zu vermeiden.

Funktionsmäßig entsprechende Teile sind bei den weiteren Ausführungsbeispielen mit gleichen Bezugszahlen gekennzeichnet.

Bei der Ausführungsform 200 der Fig. 2 besteht der Unterschied zu der Ausführungsform 100 der Fig. 1 darin, daß der Flansch 57' der Büchse 56 in Achsrichtung dickwandig ist und Sacklochungen 58 aufweist, die die Köpfe 13 der Schrauben 14 aufnehmen und die Ausnehmungen 25 bilden. Der Flansch 57' liegt an der Stirnseite bzw. Flanke 22 des Flansches 54 an, so daß die Schraubenköpfe 13 gewissermaßen eingekapselt und geschützt sind.

Bei dem Spannsatz 200 kann der Flansch 57' einen radialen Ansatz 37 aufweisen, an welchem das äußere Bauteil 1 anliegt, so daß es beim Verspannen sich in Achsrichtung gegenüber der Welle 3 nicht bewegt.

Bei der Ausführungsform 300 nach den Fig. 3 und 4 ist die Schraube 34 keine Kopfschraube, sondern greift mit einem zylindrischen, zur Achse konzentrischen Umfangsvorsprung 33 in die Ausnehmung 25 ein, wobei sich der Schraubenschaft 35 nach außen fortsetzt und in einem vor der äußeren Stirnseite des Flansches 18 gelegenen Außensechskant 36 endet, an welchem ein-Drehwerkzeug angreift.

Auch hier kann die die Außenumfangsfläche des Flansches 18 bildende Konusfläche 19 einen radial nach außen vorspringenden Ansatz 37 aufweisen, an welchem das äußere Bauteil 1 in Achsrichtung zur Anlage kommt. Beim Verspannen des Spannsatzes 300 erfolgt hierbei zusätzlich ein Abgleiten an den zylindrischen Flächen 2,6, wobei aber das äußere Bauteil 1 sich gegenüber der Welle 3 in Achsrichtung nicht verlagert, was in manchen Fällen erwünscht ist.

In Fig. 4 ist angedeutet, daß der Umfangsvorsprung 33 in der Ausnehmung 25 beidseitig mit reibungsmindernden Scheiben 16 aus mit Festschmierstoff behandeltem gehärteten Stahl sein kann. Solche Scheiben 16 können bei den Ausführungsformen nach den Fig. 1 bis 3 auch einseitig als Unterlegscheiben vorgesehen sein.

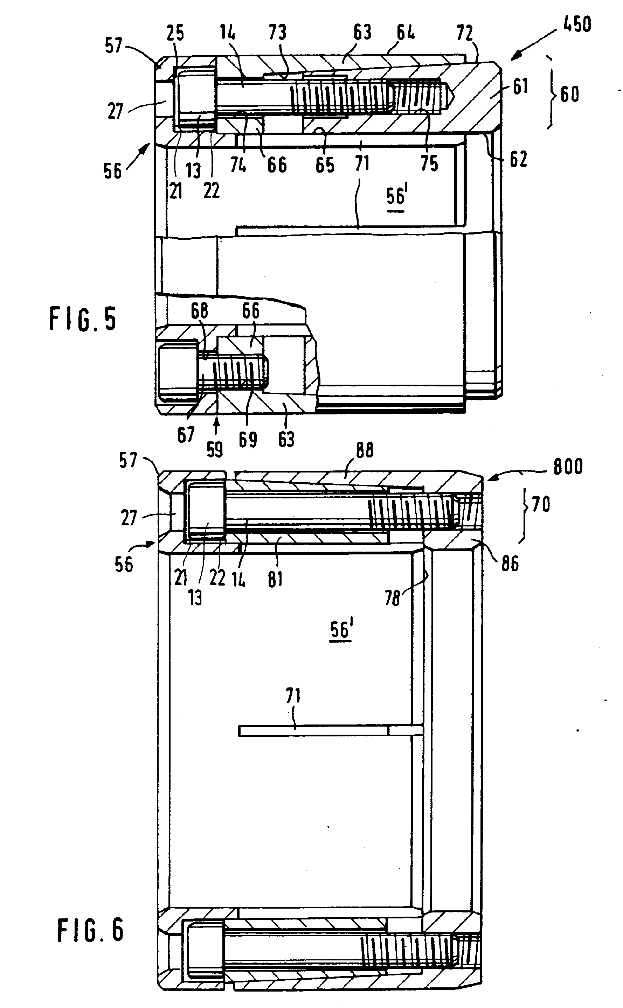

Bei der Ausführungsform 450 der Fig. 5 ist eine als Innenbüchse ausgebildete Büchse 56 vorgesehen, die einen dünnwandigen zylindrischen Teil 56' umfaßt, der mit seiner zylindrischen Innenumfangsfläche zur Anlage auf der nicht dargestellten Welle bestimmt ist und eine zylindrische Außenumfangsfläche 65 aufweist. An dem in Fig. 5 linken Ende ist ein radial nach außen vorspringender Endflansch 57 vorgesehen, in welchem die Ausnehmung 25 ausgebildet ist, die entweder aus einzelnen zylindrischen Vertiefungen besteht, die dem Kopf 13 jeder Spannschraube 14 zugeordnet sind, oder aber aus einer über den Umfang durchgehenden Nut, in die die Köpfe 13 hineinragen. Den Köpfen 13 gegenüber ist eine Ausnehmung 27 für den Durchgriff eines Drehwerkzeugs angebracht.

Der zylindrische Teil 56'ist, wie bereits erwähnt, dünnwandig und weist außerdem gemäß Fig. 5 von rechts bis kurz vor den Endflansch 56 reichende Längsschlitze 71 auf, die die Nachgiebigkeit erhöhen sollen, damit nicht zu viel von der Spannkraft der Schrauben 14 für die reine Verformung der Teile des Spannsatzes verlorengeht.

Auf der zylindrischen Außenseite 65 des dünnwandigen Teils 56' der Büchse 56 ist mit seiner zylindrischen Innenumfangsfläche 62 ein radial dickwandiger Konusring 61 angeordnet, wobei der Ausdruck "dickwandig" hier wie auch in allen anderen Ausführungsbeispielen bedeuten soll, daß die radiale Erstreckung groß genug ist, um eine ringsum geschlossene axiale Bohrung für die Spannschrauben 14 unterbringen zu können.

Mit seiner einen im Selbsthemmungsbereich liegenden Konuswinkel aufweisenden äußeren Konusfläche 72 liegt der Konusring 61 an der inneren Konusfläche 73 eines dünnwandigen Konusrings 63 an, dessen zylindrische Außenumfangsfläche 64 zur Anlage in einer entsprechenden Bohrung eines nicht dargestellten äußeren Bauteils bestimmt ist.

An dem in Fig. 5 linken Ende weist der Konusring 63 einen radial nach innen vorspringenden Flansch auf,der radial von außen zwischen die rechte Stirnseite des Endflansches 65 und die linke Stirnseite des Konusrings 61 eingreift. Die axialen Schrauben 14 durchgreifen den Flansch 66 in Durchgangsbohrungen 74 und greifen in Gewindebohrungen 75 des Konusrings 61 ein.

Die Teile 61,63,14 bilden einen üblichen Spannsatz 60 innerhalb des Spannsatzes 450, der mit der Büchse 56 zusammenwirkt und mit Büchsen 56 verschiedener Wandstärke kombinierbar ist, um einen entsprechenden Bereich von Wellendurchmessern überbrücken zu können.

Beim Anziehen der Schrauben 14 wird der Konusring 61 zwischen den Konusring 63 und den zylindrischen Teil 56' der Büchse 56 hineingezogen. Die zylindrische Innenumfangsfläche des Teils 56' und die Außenumfangsfläche 64 des Konusrings 63 verlagern sich dabei in axialer Richtung nicht, was ein wichtiger Vorteil ist, insofern die miteinander zu verspannenden Bauteile ihre einmal einjustierte axiale Lage beibehalten.

Damit beim Anziehen die Büchse 56 von dem Konusring 61 nicht gemäß Fig. 5 nach links mitgenommen wird, sind an mindestens zwei über den Umfang verteilten Stellen Verbindungsschrauben 67 vorgesehen, die von der gleichen Seite betätigbar sind wie die Schrauben 14, Durchgangsbohrungen 68 in dem Flansch 57 durchgreifen und in Gewindebohrungen 69 in dem Flansch 66 des Konusrings 63 eingreifen. An der Stirnseite 59 werden die Flansche 66,57 also in Anlage gehalten, so daß die erwähnte Verschiebung der Büchse 56 nach links nicht eintreten kann.

Die Verbindungsschrauben 67 haben auch eine Funktion beim Lösen. Wenn zu diesem Zweck die Schrauben 14 herausgedreht werden, könnte es geschehen, daß das äußere Bauteil unter Beibehaltung der Verspannung zusammen mit dem Konusring 63 und dem Konusring 61 von dem zylindrischen Teil 56' der Büchse 56 heruntergedrückt würde. Dabei würde sich der Flansch 66 von dem Flansch 57 hinwegbewegen, was durch die Verbindungsschrauben 67 verhindert wird. Das äußere Bauteil und der Spannsatz 60 können sich also nicht "im Paket" verlagern, sondern es erfolgt bei entsprechender Betätigung der Schrauben 14 ein positives Lösen des Spannsatzes 60 und damit der ganzen Spannanordnung 450.

Bei der Ausführungsform 800 der Fig. 6 ist auf dem dünnwandigen Teil 56' der Büchse 56 ein dickwandiger Konusring 71 angeordnet, der mit der Stirnseite seines dickwandigen Endes dem Endflansch 57 zugewandt ist. Auf dem Konusring 81 sitzt ein dünnwandiger Konusring 88, dessen an dem gemäß Fig. 6 rechten Ende vorgesehener Flansch 86 radial nach innen vorspringt, und zwar bis vor die Stirnseite 76 des Teils 56' der Büchse 56. Die Konusringe 81,88 bilden einen herkömmlichen Spannsatz 70.

Beim Anziehen der Schrauben 14 wird der dickwandige Konusring 81 im Gegensatz zu der Ausführungsform 450 von links nach rechts zwischen den Teil 56' der Büchse 56 und den dünnwandigen Konusring 88 hineingetrieben. Wegen der Anlage an der Stirnseite 76 behält dabei der Konusring 88 seine Position gegenüber der nicht dargestellten Welle bei, so daß auch hier die einmal eingestellte axiale Lage der Bauteile zueinander durch den Anziehvorgang nicht verändert wird.

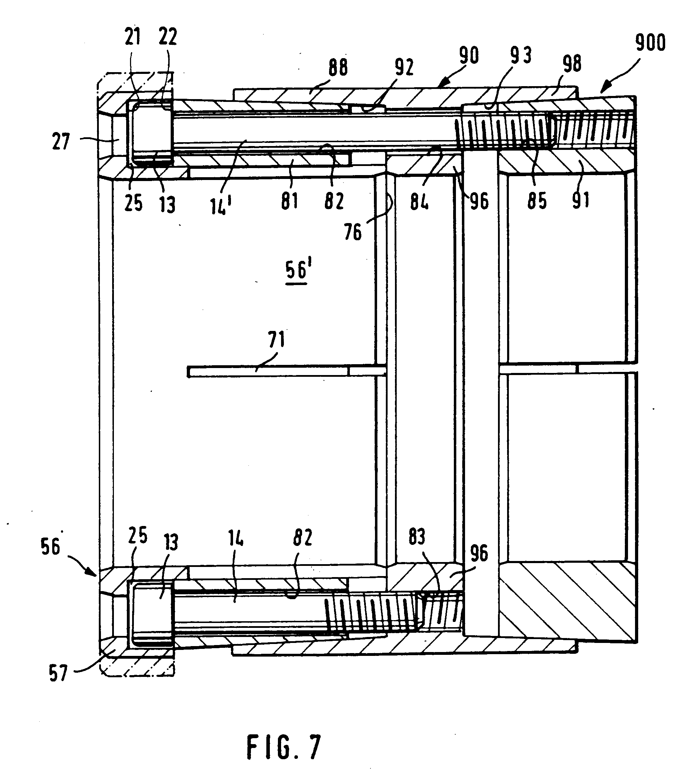

Bei der Ausführungsform 900 der Fig. 7 ist gegenüber der Ausführungsform 800 der Fig. 6 auf der dortigen rechten Seite noch eine Konusringanordnung angefügt worden. Im übrigen aber ist die Ausführungsform 800 auf der linken Seite der Fig. 7 vollständig in der Ausführungsform 900 enthalten, und es tragen die Teile dementsprechend die gleichen Bezugszahlen. Der Konusring 88 ist zu einem Doppelkonusring 90 ergänzt, indem auf der rechten Seite ein Konusringteil 98 angefügt ist. Insgesamt hat der Doppelkonusring 90 in einem durch die Achse gehenden Schnitt eine T-förmige Gestalt, wobei der Flansch 86 der Fig. 6 zu einem Mittelsteg 96 geworden ist, der gleitend mit seinem Innenumfang auf der Welle aufsitzt. Die innere Konusfläche 93 des Konusringteils 98 wirkt mit einem dickwandigen Konusring 91 zusammen, der sich mit seiner Innenumfangsfläche bis zu der nicht dargestellten Welle erstreckt.

Es ist ein erster Satz von Schrauben 14 vorhanden, die Durchgangsbohrungen 82 in dem ersten dickwandigen Konusring 81 durchgreifen und in Gewindebohrungen 83 des Mittelsteges 86 eingreifen. Die Schrauben 14 verspannen die Konusringe 81 und 88.

Es ist ein zweiter Satz von Spannschrauben 14' vorhanden, die Durchgangsbohrungen 82 in dem Konusring 81 und 84 in dem Mittelsteg 96 durchgreifen und in Gewindebohrungen 85 des zusätzlichen rechten Konusrings 91 eingreifen. Die Schrauben 14' verspannen die Konusringe 98 und 91.

Beim Lösen wird mittels der Schrauben 14' zunächst der Konusring 91 von dem Konusring 98 abgedrückt. Anschließend erfolgt das Herausdrehen der Schrauben 14 und das Abdrücken der Konusringe 88 und 81. Zwischen dem Konusring 81 und dem Endflansch 57 könnten Verbindungsschrauben 67 vorgesehen sein, wie sie in Fig. 5 dargestellt sind. Es ist aber auch möglich, den Konuswinkel der Konusfläche 93 auf der rechten Seite der Fig. 7 etwas größer zu machen als den der Konusfläche 92. Beim Auftreten einer Axialkraft löst sich dann stets zuerst der Konusring 91.

Hinsichtlich der Funktion der Ausnehmung 25 und der Erstreckung ihrer Flanken 21,22 entsprechen alle vorgenannten Ausführungsformen der Ausnehmung 25 der Fig. 1 und 2.

## Patentansprüche

1. Konusspannsatz zur Anbringung in dem Zwischenraum (50) zwischen der zylindrischen Ausnehmung (2) eines äußeren Bauteils (1) und der zylindrischen Außenumfangsfläche (4) eines inneren Bauteils (3),
mit einem ersten Konusring (53,20,63) mit einer als selbsthemmende Konusfläche ausgebildeten Umfangsfläche (17,73) und einer zylindrischen Umfangsfläche (12,64),
mit einem zweiten Konusring (51,10,61,88) mit einer an der ersten Konusfläche (17,73) anliegenden, gleichen Konuswinkel aufweisenden Konusfläche (9,72) und einer zylindrischen Umfangsfläche (52,6,62),
mit über den Umfang verteilten Schrauben (14,34), die jeweils einen Umfangsvorsprung (13,33) mit beidseitigen, zur Achse senkrechten, über den Schraubenschaft radial vorstehenden Anlageflächen (31,32) aufweisen,
mit axialen Gewindebohrungen (11,75) in dem zweiten Konusring, in die die Schraubengewinde eingreifen,
mit einer zur Achse senkrechten Flanke (22) an dem ersten Konusring (53,20,63), an der beim Anziehen die Umfangsvorsprünge (13,33) der Schrauben (14,34) eingreifen,
wobei sich die Flanke (22) gegen Axialkräfte abstützend bis über die gesamte radiale Ausdehnung der zugewandten Anlagefläche (32) des Umfangsvorsprungs (13) der Schraube (14) erstreckt
und wobei die Bauteile (1,3) beim Anziehen der Schrauben (13,34) unter Anlage einer (32) der Anlageflächen des Umfangsvorsprungs (13,33) an der Flanke (22) des ersten Konusrings (53,20) und unter Abgleiten über die Konusflächen (9,17) gegeneinander verspannbar sind,
dadurch gekennzeichnet,
daß der Konusspannsatz (100,200,300,450,800,900) eine zylindrische Innen- oder Außenbüchse (56) umfaßt, die an einer (12,62) der zylindrischen Umfangsflächen der Konusringe anliegt und einen radialen Endflansch (57,27) aufweist, der mit einer zweiten zur Achse senkrechten Flanke (21) vor den Umfangsvorsprüngen (13,33) der Schrauben (14,34) verläuft,
daß sich auch die zweite Flanke (21) gegen Axialkräfte abstützend jeweils bis über die gesamte radiale Ausdehnung der zugewandten Anlagefläche (31,32) des betreffenden Umfangsvorsprungs (13,33) erstreckt
und daß die Bauteile (1,3) beim Losdrehen der Schrauben (14,34) unter Anlage der anderen Anlagefläche (31) des Umfangsvorsprungs (13,33) an der Flanke (21) des Endflanschs (57,57') voneinander lösbar sind.

2. Konusspannsatz nach Anspruch 1, dadurch gekennzeichnet, daß auf mindestens einer der Anlageflächen (31,32) des Umfangsvorsprungs (13,33) eine Ringscheibe (16) zur Erleichterung der Drehung der Schraube (14,34) bei einwirkenden Axialkräften vorgesehen ist.

3. Konusspannsatz nach Anspruch 1 oder 2, dadurch gekennzeichnet, daß die Breite der Ausnehmung (25) von Flanke (21) zu Flanke (22) 0,3 bis 2,00 mm größer als die Breite des Umfangsvorsprungs (13,33) ist.

4. Konusspannsatz nach einem der Ansprüche 1 bis 3, dadurch gekennzeichnet, daß der Umfangsvorsprung (13) der Kopf einer Zylinderkopfschraube (14) ist.

5. Konusspannsatz nach einem der Ansprüche 1 bis 3, dadurch gekennzeichnet, daß der Umfangsvorsprung (339) im Innern der Längenerstreckung der Schraube (34) vorgesehen ist und der Schaft sich nach beiden Seiten erstreckt.

6. Konusspannsatz nach einem der Ansprüche 1 bis 5, dadurch gekennzeichnet, daß mindestens einer der die Ausnehmung (25) axial begrenzenden Flanken (21,22) einen radial nach außen offenen Ausschnitt (27,28) zur Aufnahme des Schraubenschaftes (15,35) aufweist.

7. Konusspannsatz nach einem der Ansprüche 1 bis 6, dadurch gekennzeichnet, daß der Endflansch (57') auf der den Umfangsvorsprüngen (13) zugewandten Seite für die Aufnahme der Umfangsvorsprünge (13) Sacklochungen (58) aufweist, deren Boden die eine Flanke (21) der Ausnehmung (25) bildet.

8. Konusspannsatz nach Anspruch 7, dadurch gekennzeichnet, daß der Endflansch (57') mit den Rändern der Sacklochungen (58) gegen die Stirnseite des einen Konusrings (53) anliegt.

9. Konusspannsatz nach einem der Ansprüchen 1 bis 8, dadurch gekennzeichnet, daß er einen zweiteiligen Konusspannsatz (60) umfaßt, dessen einer Konusring (53) die zylindrische Außenumfangsfläche (64) des Konusspannsatzes (60) bildet und auf der dem Endflansch (57) der zylindrischen Büchse (56) zugewandten Seite einen radial nach inneren vorspringenden Flansch (66) aufweist und dessen anderer Konusring (61) dickwandig ausgebildet ist und eine auf der zylindrischen Außenumfangsfläche (65) der Buchse (56) anliegende zylindrische Innenumfangsfläche (62) sowie eine mit der inneren Konusfläche (73) des ersten Konusrings (63) zusammenwirkende äußere Konusfläche (72) aufweist, und daß die Schrauben (14) Durchgangsbohrungen (74) des Flansches (66) durchgreifen und in Gewindebohrungen (75) des dickwandigen Konusrings (61) eingreifen.

10. Konusspannsatz nach einem der Ansprüche 1 bis 8, dadurch gekennzeichnet, daß er einen zweiteiligen Konusspannsatz (70) umfaßt, dessen einer Konusring (88) die zylindrische Außenumfangsfläche des Konusspannsatzes (70) bildet und auf der dem Endflansch (57) der zylindrischen Büchse (56) abgewandten Seite einen radial nach innen vorspringenden Flansch (86) aufweist, der sich axial außerhalb des Endes der zylindrischen Büchse (56) radial bis vor deren Stirnseite (76) erstreckt, und dessen anderer Konusring (81) dickwandig ausgebildet ist und eine auf der zylindrischen Außenumfangsfläche der zylindrischen Büchse (56) anliegende zylindrische Innenumfangsfläche sowie eine mit der inneren Konusfläche des ersten Konusrings zusammenwirkende äußere Konusfläche aufweist, und daß die Schrauben (14) Durchgangsbohrungen des dickwandigen Konusrings (81) durchgreifen und in Gewindebohrungen des Flansches (86) eingreifen.

11. Konusspannsatz nach Anspruch 9 oder 10, dadurch gekennzeichnet, daß über den Umfang verteilte, von dem Endflansch (57) in den Flansch (66) eingreifende kurze Verbindungsschrauben (67) vorgesehen sind.

12. Konusspannsatz nach einem der Ansprüche 1 bis 8, dadurch gekennzeichnet, daß er einen Doppelkonusspannsatz umfaßt, der einen dünnwandigen Doppelkonusring (90), dessen größte Wandstärke axial in der Mitte liegt und der dort einen radialen Mittelsteg (96) aufweist, der sich axial außerhalb des Endes der zylindrischen Büchse (56) radial bis vor deren Stirnseite (76) erstreckt, und zwei damti zusammenwirkende dickwandige Konusringe (81,91) aufweist, von denen der erste (81) mit seiner zylindrischen Umfangsfläche auf der zylindrischen Umfangsfläche der Büchse (56) und mit seiner Konusfläche auf einer der Konusflächen des Doppelkonusrings (90) anliegt und von denen der zweite mit seiner zylindrischen Umfangsfläche auf einer der zylindrischen Umfangsflächen der zu verspannenden Bauteile und mit seiner Konusfläche an der anderen Konusfläche (98) des Doppelkonusrings (90) anliegt, und daß zwei Sätze von über den Umfang verteilten axialen Spannschrauben (14,14') vorgesehen sind, deren Umfangsvorsprünge (13) an dem Endflansch (57) angeordnet sind und von denen der erste Satz Druchgangsbohrungen (82) in dem ersten dickwandigen Konusring (81) und dem Mittelsteg (96) durchgreift und in Gewindebohrungen (85) des zweiten dickwandigen Konusrings eingreift und von denen der zweite Satz Durchgangsbohrungen (82) in dem ersten Konusring (81) durchgreift und in Gewindebohrungen (83) des Mittelsteges (96) eingreift.

## Claims

1. Taper clamping unit for introduction in the space (50) between the cylindrical opening (2) of an outer component (1) and the cylindrical external surface (4) of an inner component (3),
with a first taper ring (53,20,63) having a peripheral surface (17,73) formed as a self-jamming conical surface and a cylindrical peripheral surface (12,64),
with a second taper ring (51,10,61,88) with a conical surface (9,72) engaging the first conical surface (17,73) and having the same cone angle and a cylindrical peripheral surface (52,6,62),
with circumferentially distributed screws (14, 34) which each have a peripheral projection (13,33) with engaging faces (31, 32) projecting radially beyond the shank of the screw on both sides and perpendicular to the axis,
with axial screw-threaded bores (11,75) in the second taper ring, in which the threads of the screws engage,
with a face (22) perpendicular to the axis on the first taper ring (53,20,63) against which the circumferential projections (13, 33) of the screws (14, 34) engage on tightening,
the faces (22) supporting against axial forces over the whole radial extent of the opposing engaging face (32) of the peripheral projection (13) of the screw (14) and
the components (1,3) being capable of clamping to one another on tightening of the screws (13, 34) with the engagement of one (32) of the engaging faces of the circumferential projection (13, 33) against the face (22) of the first taper ring (53, 20) and with relative sliding movement of the conical surfaces (9, 17),
characterised in that
the taper clamping unit (100,200,300,450,800,900) includes a cylindrical internal or external bushing (56) which engages against one (12,62) of the cylindrical peripheral faces of the taper rings and has a radial end flange (57, 27) which extends with a second face (21) perpendicular to the axis in front of the peripheral projections (31,33) of the screws (14,34),
that also the second face (21) extends in a manner abutting against axial forces respectively up to beyond the entire radial extent of the opposing engaging face (31,32) of the associated circumferential projection (13,33)
and that the components (1,3) are disengageable from one another on release of the screws (14, 34) with engagement of the other engaging face (31) of the circumferential projection (13,33) against the face (21) of the end flange (57,57').

2. Taper clamping unit according to claim 1, characterised in that there is provided on at least one of the engaging faces (31,32) of the circumferential projection (13,33) a washer (16) for easing the rotation of the screw (14,34) in the presence of axial forces.

3. Taper clamping unit according to claim 1 or 2, characterised in that the width of the recess (25) from face (21) to face (22) is 0.3 to 2.00 mm greater than the width of the circumferential projection (13,33).

4. Taper clamping unit according to one of claims 1 to 3, characterised in that the circumferential projection (13) is the head of a cylindrical cap screw (14).

5. Taper clamping unit according to one of claims 1 to 3 characterised in that the circumferential projection (339) is provided within the longitudinal extent of the screw (34) and the shank extends both sides of it.

6. Taper clamping unit according to one of claims 1 to 5, characterised in that at least one of the faces (21,22) which axially define the recess (25) has a radially outwardly open opening (27,28) for receiving the shank (15,35) of the screw.

7. Taper clamping unit according to one of claims 1 to 6, characterised in that the end flange (57') has blind holes (58), of which the bottoms form one face (21) of the recess (25), on that side which is towards the circumferential projections (13) for receiving the circumferential projections (13).

8. Taper clamping unit according to claim 7, characterised in that the end flange (57') engages with the edges of the blind holes (58) against the face of the one taper ring (53).

9. Taper clamping unit according to one of claims 1 to 8, characterised in that it has a two-part taper clamping unit (60) of which one taper ring (63) forms the cylindrical outer surface (64) of the taper clamping unit (60) and has on the end which is towards the end flange (57) of the cylindrical bush (56) a radially inwardly projecting flange (66) and of which the other taper ring (61) is of thick-walled form and has a cylindrical inner surface (62) engaging the cylindrical outer surface (65) of the bush (56) as well as an outer conical surface (72) co-operating with the inner conical surface (73) of the first taper ring (63), and that the screws (14) pass through clearance bores (74) in the flange (66) to engage in screw-threaded bores (75) in the thick-walled taper ring (61).

10. Taper clamping unit according to one of claims 1 to 8, characterised in that it includes a two-part taper clamping unit (70) of which one taper ring (88) forms the cylindrical outer surface of the taper clamping unit (70) and has on the end which is away from the end flange (57) of the cylindrical bush (56) a radially inwardly projecting flange (86) which axially outside the end of the cylindrical bush (56) extends radially as far as its face (76), and of which the other taper ring (81) is of thick-walled form and has a cylindrical inner surface engaging the cylindrical outer surface of the cylindrical bush (56) as well as an outer conical surface co-operating with the inner conical surface of the first taper ring, and that the screws (14) pass through clearance bores in thick-walled taper ring (81) to engage in screw-threaded bores in the flange (86).

11. Taper clamping unit according to claim 9 or 10, characterised in that short connecting screws (67) are provided, distributed circumferentially and engaging from the end flange (57) into the flange (66).

12. Taper clamping unit according to one of claims 1 to 8, characterised in that it includes a double taper clamping unit which has a thin-walled double taper ring (90) of which the greatest wall thickness lies axially in the middle and there has a radial central web (96) which extends axially clear of the end of the cylindrical bush (56) radially as far as its face (76), and two thick-walled taper rings (81,91) co-operating with it, of which the first (81) has a cylindrical surface engaging the cylindrical surface of the bush (56) and its conical surface engaging one of the conical surfaces of the double taper ring (90) and of which the second has its cylindrical surface engaging the cylindrical surface of the component to be clamped and its conical surface engaging the other conical surface (98) of the double taper ring (90), and that two sets of circumferentially distributed clamping screws (14,14') are provided, of which the circumferential projections (13) are arranged on the end flange (57) and of which the first set pass through clearance bores (82) in the first thick-walled taper ring (81) and the central web (96) and engage in threaded bores (85) in the second thick-walled taper ring and of which the second set pass through clearance bores (82) in the first taper ring and engage in threaded bores (83) in the central web (96).

## Revendications

1. Système de serrage conique pour application dans un intervalle (50) entre l'évidement cylindrique (2) d'une pièce de construction extérieure (1) et la surface périphérique extérieure cylindrique (4) d'un élément de construction intérieur (3), système de serrage comprenant :
- un premier anneau conique (53, 20, 63) avec une surface périphérique (17, 73) réalisée en surface conique autobloquante et une surface périphérique cylindrique (12, 64),
- un deuxième anneau conique (51, 10, 61, 88) avec une surface conique (9, 72) adhérant à la première surface conique (17, 73) et comportant le même angle de cône et une surface périphérique cylindrique (52, 6, 62),
- des boulons (14, 34) répartis sur le pourtour, qui ont respectivement une partie en saillie périphérique (13, 33) avec des deux côtés des surfaces d'appui (31, 32) en saillie radiale sur la tige de boulon et perpendiculaires à l'axe,
- des alésages filetés axiaux (11, 75) dans le deuxième anneau conique, dans lesquels engrènent les filets des boulons,
système dans lequel,
- le flanc (22) étayant contre des forces axiales s'étend jusqu'au-delà de l'étendue totale radiale de la surface d'appui (32) associée de la partie en saillie périphérique (13) du boulon, et
- les pièces (1, 3) peuvent être mises en serrage l'une contre l'autre par vissage des boulons (13, 34) par butée d'une (32) des faces d'appui de la partie en saillie périphérique (13, 33) contre le flanc (22) du premier anneau conique (53, 20) et par glissement sur les surfaces coniques (9, 17),
système de serrage caractérisé :
- en ce que le dispositif de serrage (100, 200, 300, 450, 800, 900) comprend une douille cylindrique intérieure ou extérieure (56), qui adhère à une (12, 62) des surfaces périphériques cylindriques des anneaux coniques et a une collerette radiale (57, 27) d'extrémité, qui se développe avec un deuxième flanc (21) perpendiculaire à l'axe en avant des parties en saillie périphérique (13, 33) des boulons (14, 34),
- en ce qu'également le deuxième flanc (21) étayant contre des forces radiales s'étend respectivement sur toute l'étendue radiale de la surface d'appui associée (31, 32) de la pièce en saillie périphérique concernée (13, 33), et
- en ce que les pièces (1, 3) sont détachables l'une de l'autre en desserrant les boulons (14, 34) par butée de l'autre face d'appui (31) de la partie en saillie périphérique (13, 33) contre le flanc (21) de la collerette d'extrémité (57, 57').

2. Système de serrage conique selon la revendication 1, caractérisé :
- en ce qu'au moins sur une des surfaces d'appui (31, 32) de la partie en saillie périphérique (13, 33) est prévu un disque annulaire (16) pour faciliter la rotation des boulons (14, 34) en agissant par des forces axiales.

3. Système de serrage conique selon les revendications 1 ou 2, caractérisé :
- en ce que la largeur de l'évidement (25) de flanc (21) à flanc (22) est de 0,3 à 2,00 mm plus grand que la largeur de la partie en saillie périphérique (13, 33).

4. Système de serrage conique selon l'une des revendications 1 à 3, caractérisé :
- en ce que la partie en saillie périphérique (13) est la tête d'un boulon à tête cylindrique (14).

5. Système de serrage conique selon l'une des revendications 1 à 3, caractérisé :
- en ce que la partie en saillie périphérique (339) est prévue à l'intérieur du développement longitudinal du boulon (34) et la tige s'étend des deux côtés.

6. Système de serrage conique selon l'une des revendications 1 à 5, caractérisé :
- en ce qu'au moins un des flancs (21, 22) délimitant axialement l'évidement (25) comporte un segment (27, 28) radialement ouvert vers l'extérieur pour recevoir la tige de vis (15, 35).

7. Système de serrage conique selon l'une des revendications 1 à 6, caractérisé :
- en ce que la collerette d'extrémité (57') comporte sur la face tournée vers les parties en saillie périphérique (13) des perçages borgnes (58) dont le fond constitue l'un des flancs (21) de l'évidement (25).

8. Système de serrage conique selon la revendication 7, caractérisé :
- en ce que la collerette d'extrémité (57') adhère par les bords des perçages borgnes (58) contre la face frontale d'un des anneaux coniques (53).

9. Système de serrage conique selon la revendication 7, caractérisé :
- en ce qu'il comprend un dispositif de serrage (60) en deux parties, dont un anneau conique (63) constitue la surface cylindrique périphérique extérieure (64) du système de serrage conique et a sur la face tournée vers la collerette d'extrémité (57) de la douille cylindrique (56) une collerette (66) faisant saillie vers l'intérieur et dont l'autre anneau conique (61) est réalisé avec des parois épaisses et a une surface de périphérie intérieure cylindrique (62) adhérant sur la surface de la périphérie extérieure cylindrique (65) de la douille (56) ainsi qu'une surface conique extérieure (72) coopérant avec la surface conique intérieure (73) du premier anneau conique (63), et
- en ce que les boulons (14) traversent les alésages de passage (74) de la collerette (66) et engrènent dans des alésages filetés (75) de l'anneau conique à parois épaisses (61).

10. Système de serrage selon l'une des revendications 1 à 8, caractérisé :
- en ce qu'il comprend un dispositif de serrage conique en deux parties (70) dont un anneau conique (88) forme la surface de périphérie externe cylindrique du dispositif de serrage conique (70) et a sur la face éloignée de la collerette (57) de la douille cylindrique (56) une collerette (86) en saillie radiale vers l'intérieur, qui s'allonge axialement en dehors de l'extrémité de la douille cylindrique (56) radialement jusque devant sa face frontale (76), et dont l'autre anneau conique (81) est réalisé à paroi épaisse et a une surface de périphérie intérieure cylindrique adhérant à la surface de périphérie extérieure cylindrique de la douille cylindrique (56) ainsi qu'une surface conique extérieure coopérant avec la surface conique intérieure du premier anneau conique, et
- en ce que les boulons (14) traversent des alésages de passage de l'anneau conique à paroi épaisse (81) et engrènent dans des alésages filetés de la collerette (86).

11. Système de serrage conique selon les revendications 9 ou 10, caractérisé :
- en ce que des boulons de jonction courts (67) distribués sur le pourtour, engrenant de la collerette d'extrémité (57) dans la collerette (66) sont prévus.

12. Système de serrage conique selon l'une des revendications 1 à 8, caractérisé :
- en ce qu'il comporte un système de serrage à double cône, qui comporte un anneau à double conicité (90) à paroi mince, dont l'épaisseur de paroi la plus forte est au milieu et qui a à cet endroit une entretoise médiane radiale (96), qui s'étend axialement en dehors de l'extrémité de la douille cylindrique (56) radialement jusque devant la face frontale de celle-ci (76), et deux anneaux coniques (81, 91) à paroi mince agissant ensemble, parmi lesquels le premier (81) adhère par sa surface périphérique cylindrique sur la surface périphérique cylindrique de la douille (56) et par sa surface conique sur une des surfaces coniques de l'anneau à double conicité (90) et parmi lesquels le deuxième adhère par sa surface périphérique cylindrique sur une des surfaces périphériques cylindriques des pièces à serrer et par sa surface conique à l'autre surface conique (98) de l'anneau à double conicité (90), et
- en ce que deux lots de boulons de serrage (14, 14') axiaux répartis sur le pourtour sont prévus, dont les parties périphériques en saillie (13) sont disposées sur la collerette d'extrémité (57) et parmi lesquels le premier lot traverse des alésages de passage (82) dans le premier anneau conique à paroi épaisse (81) et l'entretoise médiane (96) et engrène dans des alésages filetés (85) du deuxième anneau conique à paroi épaisse et parmi lesquels le deuxième lot traverse des alésages de passage (82) dans le premier anneau conique (81) et engrène dans des alésages filetés (83) de l'entretoise médiane (96).
